# EUROPÄISCHE PATENTSCHRIFT

(11) **EP 2 822 786 B1**
(45) Veröffentlichungstag und Bekanntmachung des Hinweises auf die Patenterteilung: **01.08.2018**
(21) Anmeldenummer: 13700321.6
(22) Anmeldetag: 17.01.2013
(51) Int. Cl.: B60G 3/06, B60G 7/00

(54) **AUFGELÖSTER QUERLENKER MIT SCHWENKBAREN TEILQUERLENKER**
COMPOUND SUSPENSION ARM WITH SEPARATE SWIVELLING ARMS
BRAS DE SUSPENSION COMPOSÉ AVEC BRAS PIVOTANTS SÉPARÉS

(30) Priorität: 05.03.2012 DE 102012203382
(43) Veröffentlichungstag der Anmeldung: 14.01.2015
(73) Patentinhaber: Schaeffler Technologies AG & Co. KG, 91074 Herzogenaurach (DE)
(72) Erfinder: VOGLER, Tobias, 91074 Herzogenaurach (DE); FISCHER, Raphael, 91074 Herzogenaurach (DE)
(86) Internationale Anmeldenummer: PCT/EP2013/050769
(87) Internationale Veröffentlichungsnummer: WO 2013/131668

(56) Entgegenhaltungen:
- EP-A2- 1 564 041
- DE-A1- 3 620 213
- DE-A1-102004 020 073
- DE-A1-102006 056 484
- DE-A1-102009 023 362
- DE-A1-102014 225 596
- DE-A1-102014 225 598
- DE-T2-602004 002 248
- FR-A1- 2 940 191
- GB-A- 897 646
- JP-A- 2007 038 974

## Beschreibung

### Gebiet der Erfindung

Die Erfindung betrifft einen aufgelösten Querlenker, eine Radaufhängung und ein damit ausgestattetes Fahrzeug. Solche aufgelösten Querlenker welche zudem einen schwenkbaren Teilquerlenker umfassen, bei dem der Teilquerlenker um eine sich (hauptsächlich) zwischen dem Radverbindungsgelenk und dem Fahrzeugverbindungsgelenk des Teilquerlenkers erstreckende (kinematische) Schwenkachse schwenkbar ist, werden in der EP 1 564 041 A2, in der DE 10 2004 020073 A1, sowie in der GB 897 646 A offenbart. Nach derzeitigem Stand der Technik verfügen die meisten Personenkraftwagen über Mc-Pherson-Radaufhängungen an der gelenkten Vorderachse. Zusätzlich dazu existieren verschiedene Radaufhängungen wie die Vierlenkerachse oder das Revo-Knuckle.

Mit derartigen Radaufhängungen ist jedoch der Lenkwinkel am kurveninneren Rad auf etwa 45 ° beschränkt.

Bei angetriebenen Rädern beruht dies neben der Lenkkinematik im Wesentlichen darauf, dass der Lenkwinkel durch den maximalen Beugewinkel des radseitigen Gleichlaufgelenks bestimmt wird. Die maximalen Beugewinkel dieser Gleichlaufgelenke liegen bei etwa 52°. Durch die Schwenkbewegung des Gelenks beim Lenken und die Kombination aus Gelenkwinkel beim Federn und Lenken (geometrische Addition) sind die maximalen Beugewinkel im Gelenk größer als die maximalen Lenkwinkel, so dass beispielsweise ein Beugewinkel von 52° einem maximalen Lenkwinkel von etwa 45 ° entspricht.

Bei nicht angetriebenen Vorderrädern besteht die Begrenzung der maximalen Lenkwinkel der Vorderräder durch Gleichlaufgelenke zwar nicht, jedoch wirken hierbei die das Fahrzeug beschleunigenden Längskräfte des Hinterradantriebs in der Querkraftkomponente quer zu den Vorderrädern. Bei einem zu starken Einlenken der Vorderräder, könnte dies dazu führen, dass die Vorderräder teilweise quer über die Fahrbahn geschoben würden.

Ein starkes Einlenken der Räder in beide Richtungen kann zwar durch eine Radaufhängung mit einem elektrischen Aktuatoren mit Getriebe und Steuermodule/n realisiert werden, diese Lösungen sind jedoch aufwendig, teuer und schwer. Zudem erfordert die Aktuierung der Lenkung eine hohe Leistung, was kontraproduktiv im Hinblick auf die Energieeinsparung beziehungsweise Energieeffizienz des Fahrzeugs ist.

### Gegenstand der Erfindung

Der Erfindung liegt die Aufgabe zugrunde einen Querlenker für ein, insbesondere lenkbares, Rad eines Fahrzeuges, insbesondere eines Kraftfahrzeugs, zur Verfügung zu stellen, durch welchen die Manövrierbarkeit des Fahrzeugs verbessert werden kann.

Diese Aufgabe wird durch einen aufgelösten Querlenker gelöst, welcher mindestens ein Radverbindungsgelenk zum gelenkigen Anbinden des Querlenkers an das Rad, mindestens zwei Fahrzeugverbindungsgelenke zum gelenkigen Anbinden des Querlenkers an das Fahrzeug umfasst und zwei schwenkbare Teilquerlenker umfasst, wobei die Teilquerlenker einerseits mit einem Fahrzeugverbindungsgelenk und andererseits mit einem Radverbindungsgelenk verbunden sind und bei dem die zwei schwenkbaren Teilquerlenker jeweils um eine sich zwischen dem Radverbindungsgelenk und dem Fahrzeugverbindungsgelenk des jeweiligen Teilquerlenkers erstreckende (kinematische) Schwenkachse schwenkbar sind, von dem mindestens ein Teil, insbesondere vollständig, beabstandet zu der Schwenkachse ausgebildet ist.

Der erfindungsgemäße Querlenker ist insbesondere für durch einen Radnabenantrieb angetriebene lenkbare Räder vorteilhaft, da diese ohne eine Antriebswelle angetrieben werden können und die Abtriebskräfte in Richtung der Lenkrichtung wirken können und somit das Potential aufweisen sehr hohe Lenkeinschläge zu realisieren. Dieses Potential kann jedoch mit konventionellen Radaufhängungen nicht ausgenutzt werden, da bei diesen bei sehr hohen Lenkwinkeln das Rad mit dem Querlenker der Radaufhängung kollidieren würde.

Dadurch, dass mindestens ein Teil des jeweiligen schwenkbaren Teilquerlenkers von der Schwenkachse beabstandet ausgebildet ist, können die schwenkbaren Teilquerlenker beim Einlenken des Rades durch eine Schwenkbewegung dem Rad ausweichen, so dass der Lenkwinkel des Rades vergrößert werden kann. Insgesamt können so sehr große maximale Lenkwinkel, beispielsweise von bis 70°, 80°, 85°, 90° und sogar über 90°, erzielt werden. So kann vorteilhafterweise die Manövrierbarkeit beziehungsweise Wendigkeit des Fahrzeugs verbessert werden. Bereits durch einen derartig ausgestalteten Teilquerlenker kann, beispielsweise durch einen Paralleleinschlag aller Räder der Vorderachse und Hinterachse um 90°, das Einparken des Fahrzeugs vereinfacht werden. Durch zwei derartig ausgestaltete Teilquerlenker kann vorteilhafterweise der maximale Lenkwinkel in beide Lenkeinschlagsrichtungen erhöht werden, wodurch die Manövrierbarkeit beziehungsweise Wendigkeit weiter erhöht, der Wendekreis des Fahrzeugs reduziert und große Fahrtrichtungsänderung ermöglicht werden können.

Durch einen mit dem erfindungsgemäßen Querlenker erzielbaren maximalen Lenkwinkel von über 90° kann sogar vorteilhafterweise unter Einhaltung der Ackermannbedingung (alle projizierten Radachsen Schneiden sich im Kurvenmittelpunkt) bewirkt werden, dass sich ein Fahrzeug mit ungelenkter Hinterachse um die Mitte der Hinterachse drehen kann. Das kurveninnere Rad würde dann einen Lenkwinkel von 90°+x und das kurvenläufigere Rad einen Lenkwinkel von 90°-x, wobei x abhängig von der Spurweite, dem Radstand und gegebenenfalls dem Lenkrollradius des Fahrzeugs ist. Bei Fahrzeugen mit gelenkter Vorderachse und gelenkter Hinterachse, wäre es sogar möglich, das Fahrzeug um zum Beispiel die Fahrzeugmitte zu drehen.

Zudem kann eine Radaufhängung mit einem erfindungsgemäßen Querlenker weniger aufwendig und damit kostengünstiger und zuverlässiger als eine Radaufhängung mit einem elektrischen Aktuator mit Getriebe und Steuermodule/n sein. Zudem kann eine Radaufhängung mit einem erfindungsgemäßen Querlenker ein vergleichsweise geringes Gewicht aufweisen.

Die teilweise Beabstandung des mindestens einen schwenkbaren Teilquerlenkers von der Schwenkachse kann durch eine zweidimensionale oder dreidimensionale Ausformung des schwenkbaren Teilquerlenkers bewirkt werden.

Im Rahmen einer Ausführungsform umfasst mindestens einer der schwenkbaren Teilquerlenker mindestens ein starres Teilquerlenkersegment, welches zumindest teilweise (einfach oder mehrfach) gewinkelt und/oder teilweise (einfach oder mehrfach) gebogen ausgeführt ist. So kann beispielsweise realisiert werden, dass mindestens ein Teil des schwenkbaren Teilquerlenkers, insbesondere im Bereich der Winkelung oder Biegung, beabstandet zu der Schwenkachse ist. Zum Beispiel kann das starre Teilquerlenkersegment im Wesentlichen U-förmig oder bügelförmig ausgestaltet sein. Gegebenenfalls kann mindestens einer der schwenkbaren Teilquerlenker in Form eines starren Teilquerlenkersegments ausgebildet sein, welches zumindest teilweise (einfach oder mehrfach) gewinkelt und/oder teilweise (einfach oder mehrfach) gebogen, zum Beispiel im Wesentlichen U-förmig oder bügelförmig, ausgeführt ist.

Im Rahmen einer anderen, alternativen oder zusätzlichen Ausführungsform umfasst mindestens einer der schwenkbaren Teilquerlenker mindestens zwei starre Teilquerlenkersegmente, welche durch ein flexibles Verbindungselement, insbesondere zueinander gewinkelt, verbunden sind. So kann ebenfalls realisiert werden, dass mindestens ein Teil des schwenkbaren Teilquerlenkers, insbesondere im Bereich des flexiblen Verbindungselements, beabstandet zu der Schwenkachse ist. Gegebenenfalls kann der schwenkbare Teilquerlenker aus zwei, über ein flexibles Verbindungselement, beispielsweise zueinander gewinkelt, verbundenen, starren Teilquerlenkersegmenten bestehen.

Das flexible Verbindungselement kann beispielsweise ein Gelenk oder eine Kombination aus zwei oder mehr Gelenken sein.

Im Rahmen einer speziellen Ausgestaltung dieser Ausführungsform ist das flexible Verbindungselement mindestens einer der schwenkbaren Teilquerlenker ein Kugelgelenk.

Grundsätzlich ist es möglich die Schwenkbewegung des mindestens einen schwenkbaren Teilquerlenkers auf verschiede Weise zu bewirken.

Im Rahmen einer bevorzugten Ausführungsform ist mindestens einer der schwenkbaren Teilquerlenker jedoch durch eine Radkoppel, zum Beispiel eine Radträgerkoppel, mit einem Bauteil verbunden, welches eine mit einer Lenkbewegung des Rades einhergehende Bewegung vollzieht. So kann vorteilhafterweise eine an die Lenkbewegung des Rades gekoppelte Bewegung des Teilquerlenkers bewirkt werden. Bei dem Bauteil kann es sich beispielsweise um das Rad, insbesondere den Radträger, ein Lenkgetriebe zur Lenkung des Rades oder einen Aktuator zur Lenkung des Rades handeln. Dadurch, dass der mindestens eine Teilquerlenker durch die Radkoppel aktuiert wird, kann vorteilhafterweise auf zusätzliche Bauteile zur Aktuierung der Radkoppel verzichtet und damit die Herstellungskosten und die Energieeffizienz verbessert werden. Erfindungsgemäß umfasst der Querlenker zwei schwenkbare Teilquerlenker. Insbesondere kann der Querlenker einen ersten Teilquerlenker und einen zweiten Teilquerlenker umfassen, wobei der erste Teilquerlenker um eine sich zwischen dem Radverbindungsgelenk und dem Fahrzeugverbindungsgelenk des ersten Teilquerlenkers erstreckende Schwenkachse schwenkbar ist und mindestens ein Teil des ersten Teilquerlenkers beabstandet zu der Schwenkachse des ersten Teilquerlenkers ausgebildet ist und wobei der zweite Teilquerlenker um eine sich zwischen dem Radverbindungsgelenk und dem Fahrzeugverbindungsgelenk des zweiten Teilquerlenkers erstreckende Schwenkachse schwenkbar ist und mindestens ein Teil des zweiten Teilquerlenkers beabstandet zu der Schwenkachse des zweiten Teilquerlenkers ausgebildet ist. Der erste Teilquerlenker kann dabei mindestens ein starres Teilquerlenkersegment, welches zumindest teilweise gewinkelt und/oder teilweise gebogen ausgeführt ist, und/oder mindestens zwei starre Teilquerlenkersegmente, welche durch ein flexibles Verbindungselement, beispielsweise Kugelgelenk, insbesondere zueinander gewinkelt, verbunden sind, umfassen. Der zweite Teilquerlenker kann dabei ebenfalls mindestens ein starres Teilquerlenkersegment, welches zumindest teilweise gewinkelt und/oder teilweise gebogen ausgeführt ist, und/oder mindestens zwei starre Teilquerlenkersegmente, welche durch ein flexibles Verbindungselement, beispielsweise Kugelgelenk, insbesondere zueinander gewinkelt, verbunden sind, umfassen. Der mindestens eine Teilquerlenker, insbesondere die mindestens zwei Teilquerlenker, zum Beispiel der erste und/oder zweite Teilquerlenker, kann/können beispielsweise bei einem Übergang des Rades von einer uneingelenkten Stellung in eine maximal eingelenkte Stellung von einer ersten Stellung, insbesondere in welcher der mindestens eine beabstandete Teil im Wesentlichen vertikal ausgerichtet ist, in eine zweite Stellung, insbesondere in welcher der mindestens eine beabstandete Teil im Wesentlichen horizontal ausgerichtet ist, schwenkbar sein, insbesondere wobei in der zweiten Stellung ein von dem mindestens einen beabstandeten Teil umgebener Raum von dem Rad einnehmbar ist. Der mindestens eine Teilquerlenker, insbesondere die mindestens zwei Teilquerlenker, zum Beispiel der erste und/oder zweite Teilquerlenker, kann/können beispielsweise im Wesentlichen U-förmig oder bügelförmig ausgestaltet sein, insbesondere wobei sich die Schwenkachse entlang der Öffnung des Us beziehungsweise Bügels erstrecken kann. Dabei können unter im Wesentlichen vertikal beziehungsweise im Wesentlichen horizontal - neben der Vertikalen beziehungsweise Horizontalen - auch Ausrichtungen verstanden werden, welche beispielsweise bis zu ± 20° von der Vertikalen beziehungsweise Horizontalen abweichen. Angesichts der Tatsache, dass der Querlenker zwei schwenkbare Teilquerlenker, beispielsweise einen ersten und einen zweiten, schwenkbaren Teilquerlenker, umfasst, ist vorzugsweise mindestens einer der schwenkbaren Teilquerlenker, beispielsweise der erste und/oder zweite Teilquerlenker, durch eine Radkoppel mit einem Bauteil verbunden, welches eine mit einer Lenkbewegung des Rades einhergehende Bewegung vollzieht.

Grundsätzlich ist es dabei möglich die schwenkbaren Teilquerlenker einzeln beziehungsweise getrennt voneinander durch mehrere Radkoppeln anzubinden, um eine gleichsinnige Bewegung der Teilquerlenker zu bewirken.

Um den Querlenker einfach zu halten, reicht es jedoch aus (nur) einen der schwenkbaren Teilquerlenker durch die Radkoppel mit dem Bauteil zu verbinden, welcher eine mit einer Lenkbewegung des Rades einhergehende Bewegung vollzieht, wobei eine gleichsinnige Bewegung des beziehungsweise der anderen schwenkbaren Teilquerlenker/s durch eine oder mehrere Querlenkerkoppeln bewirkt werden kann. So kann vorteilhafterweise der Effekt erzielt werden, dass der beziehungsweise die anderen schwenkbaren Teilquerlenker eine "entsprechende" Bewegung mit dem lenkenden Rad vollführen, und eine Ausweichbewegung vollziehen.

Im Rahmen einer weiteren bevorzugten Ausführungsform weist daher der Querlenker eine Querlenkerkoppel auf, durch welche mindestens zwei schwenkbare Teilquerlenker, insbesondere gelenkig, miteinander verbunden sind. Die Querlenkerkoppel kann dabei insbesondere die flexiblen Verbindungselemente von zwei schwenkbaren Teilquerlenkern miteinander verbinden.

Die Teilquerlenker können einen gemeinsamen radseitigen Drehpunkt aufweisen und beispielsweise direkt oder indirekt gelenkig mit dem Radträger des Rades verbunden sein.

Im Rahmen einer Ausführungsform umfasst der Querlenker ein Radverbindungsgelenk, über welches die Teilquerlenker (gemeinsam) mit dem Rad verbunden sind. Zum Beispiel kann dabei der erste Teilquerlenker einerseits mit einem Radverbindungsgelenk verbunden sein, mit welchem auch der zweite Teilquerlenker verbunden ist. Auf der anderen Seite können dabei der erste und der zweite Teilquerlenker getrennt voneinander mit jeweils einem (eigenen) Fahrzeugverbindungsgelenk verbunden sein. Bei dem Radverbindungsgelenk kann es sich beispielsweise um ein einzelnes Gelenk, insbesondere ein Kugelgelenk, handeln. Es ist jedoch ebenso möglich das Radverbindungsgelenk als mehrgelenkige Zusammenführung auszugestalten, beispielsweise welche ein Kugelgelenk und zwei Drehgelenke umfasst, wobei die Zusammenführung durch das Kugelgelenk gelenkig mit dem Rad verbindbar ist und durch die Drehgelenke jeweils gelenkig mit den Teilquerlenkern verbunden ist.

Es ist jedoch ebenso möglich, dass die Teilquerlenker getrennte radseitige Drehpunkte aufweisen.

Im Rahmen einer anderen Ausführungsform umfasst daher der Querlenker mehrere, insbesondere zwei, Radverbindungsgelenke, wobei die Teilquerlenker jeweils getrennt voneinander über ein Radverbindungsgelenk mit dem Rad verbindbar sind. Die Radverbindungsgelenke können dabei beispielsweise Kugelgelenke sein. Zum Beispiel kann dabei der erste Teilquerlenker einerseits mit einem (eigenen) Radverbindungsgelenk und andererseits mit einem (eigenen) Fahrzeugverbindungsgelenk verbunden sein, wobei der zweite Teilquerlenker ebenfalls einerseits mit einem (eigenen) Radverbindungsgelenk und andererseits mit einem (eigenen) Fahrzeugverbindungsgelenk verbunden ist.

Das beziehungsweise die Radverbindungsgelenk/e können sowohl zum Tragen als auch zum Führen des Rades ausgestaltet sein. Daher kann das beziehungsweise können die Radverbindungsgelenke auch als Radführungs- und/oder Traggelenke bezeichnet werden.

Die Fahrzeugverbindungsgelenke können ebenfalls einzelne Gelenke, beispielsweise Kugelgelenke, oder Gelenkkombinationen, beispielsweise aus zwei Drehgelenken sein.

Dadurch dass die Teilquerlenker durch das oder die Radbefestigungsgelenke und die Fahrzeugverbindungsgelenke drehgelagert sind, können sie um ihre Längsachse schwenken.

Im Rahmen einer weiteren Ausführungsform beträgt der Abstand zwischen dem mindestens einen zur Schwenkachse beabstandeten Teil des jeweiligen schwenkbaren Teilquerlenkers und der Schwenkachse des schwenkbaren Teilquerlenkers ≥ 2 cm, insbesondere ≥ 5 cm, beispielsweise ≥ 10 cm, zum Beispiel von ≥ 5 cm oder ≥ 10 cm bis ≤ 100 cm (PKW/NKW) oder ≤ 30 cm (PKW), beispielsweise um etwa 16 cm (PKW). Insofern der Querlenker einen ersten und einen zweiten schwenkbaren Teilquerlenker aufweist, kann sowohl der Abstand zwischen dem mindestens einen zur Schwenkachse des ersten Teilquerlenkers beabstandeten Teil des ersten Teilquerlenkers und der Schwenkachse des ersten Teilquerlenkers als auch der Abstand zwischen dem mindestens einen zur Schwenkachse des zweiten Teilquerlenkers beabstandeten Teil des zweiten Teilquerlenkers und der Schwenkachse des zweiten Teilquerlenkers ≥ 2 cm, insbesondere ≥ 5 cm, beispielsweise ≥ 10 cm, zum Beispiel von ≥ 5 cm oder ≥ 10 cm bis ≤ 100 cm (PKW/NKW) oder ≤ 30 cm (PKW), beispielsweise um etwa 16 cm (PKW), betragen. Dabei kann der Abstand des ersten Teilquerlenkers insbesondere unterschiedlich von dem Abstand des zweiten Teilquerlenkers sein.

Der von der Schwenkachse beabstandete Teil des mindestens einen schwenkbaren Teilquerlenkers kann sich beispielsweise über eine Länge von ≥ 5 cm, insbesondere ≥ 10 cm, beispielsweise ≥ 15 cm oder ≥ 30 cm, zum Beispiel von ≥ 5 cm oder ≥ 10 cm oder ≥ 15 cm oder ≥ 30 cm bis ≤ 100 cm (LKW/NKW) oder ≤ 50 cm (PKW) oder ≤ 40 cm, beispielsweise um etwa 25 cm (PKW), beabstandet, insbesondere in mindestens einem vorstehend angegebenen Abstand, zur Schwenkachse erstrecken. Angesichts der Tatsache, dass der Querlenker einen ersten und einen zweiten schwenkbaren Teilquerlenker aufweist, kann sich sowohl der von der Schwenkachse des ersten Teilquerlenkers beabstandete Teil des ersten Teilquerlenkers als auch der von der Schwenkachse des zweiten Teilquerlenkers beabstandete Teil des zweiten Teilquerlenkers über eine Länge von ≥ 5 cm, insbesondere ≥ 10 cm, beispielsweise ≥ 15 cm oder ≥ 30 cm, zum Beispiel von ≥ 5 cm oder ≥ 10 cm oder ≥ 15 cm oder ≥ 30 cm bis ≤ 100 cm (LKW/NKW) oder ≤ 50 cm (PKW) oder ≤ 40 cm, beispielsweise um etwa 25 cm (PKW), beabstandet, insbesondere in mindestens einem vorstehend angegebenen Abstand, zur jeweiligen Schwenkachse des erstrecken. Dabei kann die Länge des ersten Teilquerlenkers insbesondere unterschiedlich von der Länge des zweiten Teilquerlenkers sein.

Der Querlenker kann ein unterer und/oder oberer Querlenker sein.

Ein weiterer Gegenstand der vorliegenden Erfindung ist eine Radaufhängung für ein, insbesondere gelenktes, Rad eines Fahrzeugs, insbesondere Kraftfahrzeugs, welche mindestens einen erfindungsgemäßen Querlenker umfasst. Insbesondere kann die Radaufhängung für ein, insbesondere gelenktes, durch einen Radnabenantrieb angetriebenes Rad eines (Kraft-)Fahrzeugs ausgebildet sein. Dabei kann es sich sowohl um eine Radaufhängung für die Vorderachse als auch um eine Radaufhängung für die Hinterachse des Fahrzeugs handeln.

Ferner betrifft die vorliegende Erfindung ein Fahrzeug, insbesondere mit mindestens einem durch einen Radnabenantrieb angetriebenen Rad, welches mindestens einen erfindungsgemäßen Querlenker und/oder eine erfindungsgemäße Radaufhängung umfasst

Das Fahrzeug kann insbesondere ein Kraftfahrzeug, beispielsweise ein Elektrofahrzeug, insbesondere mit Radnabenantrieb, sein. Zum Beispiel kann das Fahrzeug ein Stadtfahrzeug mit Radnabenantrieb, ein Personenkraftwagen, ein Lastkraftwagen oder ein Nutzkraftwagen sein.

### Zeichnungen

Nachfolgend wird die Erfindung unter Bezugnahme auf die anliegenden Zeichnungen anhand bevorzugter Ausführungsbeispiele exemplarisch erläutert. Es zeigen:
- Fig. 1-18: schematische Zeichnungen zur Veranschaulichung unterschiedlicher Querlenker;
- Fig. 19a: eine schematische Draufsicht von oben auf ein uneingelenktes linkes Vorderrad eines Fahrzeugs, welches mit einer speziellen Ausgestaltung der in Figur 18 gezeigten Ausführungsform eines erfindungsgemäßen Querlenkers ausgestattet ist;
- Fig. 19b: eine schematische Draufsicht auf die in Fig. 19a gezeigte Ausgestaltung im eingelenkten Zustand;
- Fig. 20a,b: perspektivische Ansichten der in den Fig. 19a und 19b gezeigten Ausgestaltung im uneingelenkten und eingelenkten Zustand;
- Fig. 21a,b: schematische seitliche Ansichten der in den Fig. 19a bis 20b gezeigten Ausgestaltung im uneingelenkten beziehungsweise eingelenkten Zustand;
- Fig. 22a,b: schematische Ansichten in Fahrtrichtung der in den Fig. 19a bis 21b gezeigten Ausgestaltung im uneingelenkten beziehungsweise eingelenkten Zustand; und
- Fig. 23: eine Skizze zur Veranschaulichung der Lenkwinkelbeschränkung bei herkömmlichen Querlenkern.

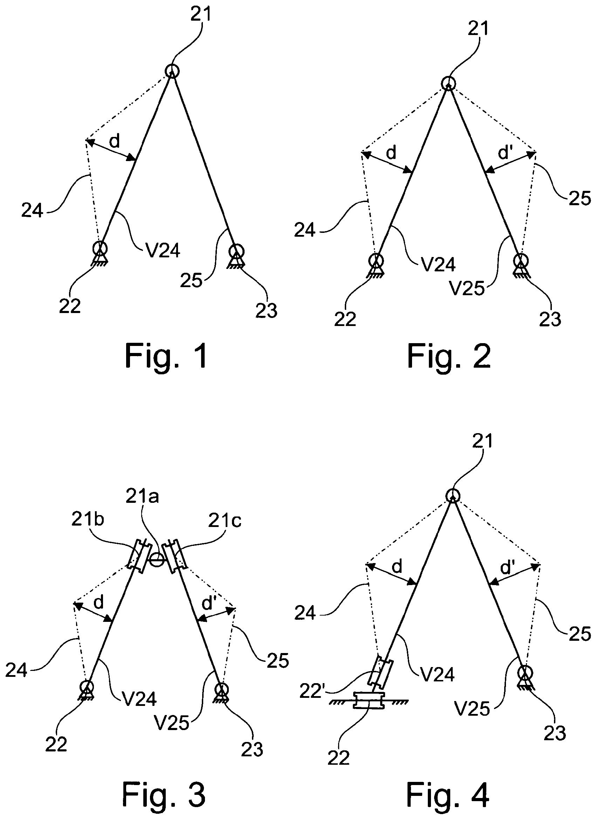

Die Figuren 1 bis 18 sind stark schematisierte Skizzen zur Veranschaulichung unterschiedlicher Querlenker. Darin sind schwenkbare Teilquerlenker 24,25 mit gestrichelten Linien dargestellt. Die gestrichelten Linien deuten dabei die Form der schwenkbaren Teilquerlenker an und sollen zeigen, dass die schwenkbaren Teilquerlenker 24,25 zum Teil oberhalb und/oder unterhalb der Papierebene ausgebildet sein können. Die gezeigten Gelenkpunkte können dreidimensional betrachtet ebenfalls oberhalb und/oder unterhalb der Papierebene liegen. Um Winkel und Auswölbungen der schwenkbaren Teilquerlenker 24,25 darstellen zu können, welche oberhalb beziehungsweise unterhalb der Papierebene liegen können, sind diese jeweils im äußeren Bereich der Skizzen dargestellt. Dies soll jedoch nicht dahingehend interpretiert werden, dass die Winkel und Auswölbungen der schwenkbaren Teilquerlenker 24,25 in unterschiedliche Richtungen ausgebildet sein müssen. In den Figuren 2 bis 18 veranschaulichen die durchgezogenen Linien die Schwenkachsen V24,V25 der schwenkbaren Teilquerlenker 24,25 und können dabei einer idealisierten Projektion der schwenkbaren Teilquerlenker 24,25 entsprechen.

In Figur 1 veranschaulicht eine der durchgezogenen Linien 24 ebenfalls die Schwenkachse V24 und idealisierte Projektion eines schwenkbaren Teilquerlenkers 24. Die andere durchgezogene Linie 25 illustriert, dass es möglich ist dabei den anderen Teilquerlenker 25 im Wesentlichen gerade ausgestaltet auszugestalten. Dies ist aber aus dem Stand der Technik bekannt und ist kein Teil der Erfindung. Die Figuren 2 bis 4 zeigen Ausführungsformen von aufgelösten Querlenkern mit zwei Teilquerlenkern 24,25, in denen die Teilquerlenker 24,25 einen gemeinsamen radseitigen Drehpunkt aufweisen, welcher mit dem Drehpunkt des Radträgers des Rades zusammen fallen kann.

In den in den Figuren 2 bis 4 gezeigten Ausführungsformen weisen die Querlenker, zwei Teilquerlenker 24,25, ein Radverbindungsgelenk 21;21a,21b,21c zum gelenkigen Anbinden des Querlenkers an ein Rad und zwei Fahrzeugverbindungsgelenke 22,22';23 zum gelenkigen Anbinden des Querlenkers an ein Fahrzeug auf. Die Teilquerlenker 24,25 sind dabei einerseits jeweils getrennt voneinander mit einem der Fahrzeugverbindungsgelenke 22,22';23 verbunden.

Andererseits sind die Teilquerlenker 24,25 mit einem gemeinsamen Radverbindungsgelenk 21;21a,21b,21c verbunden.

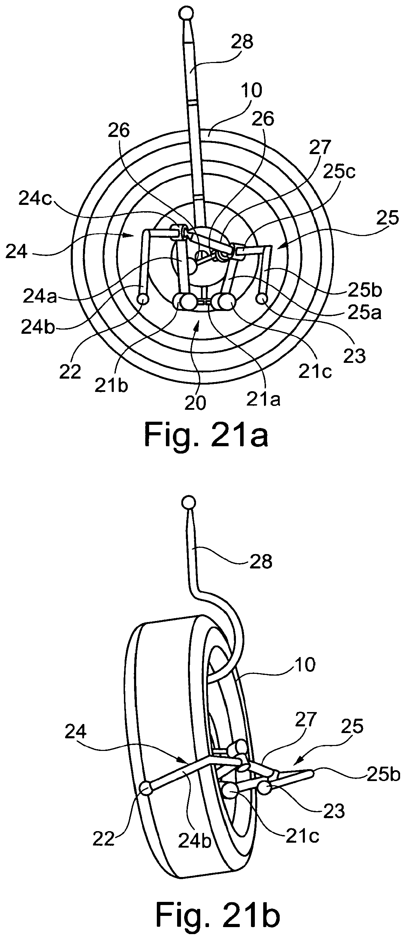

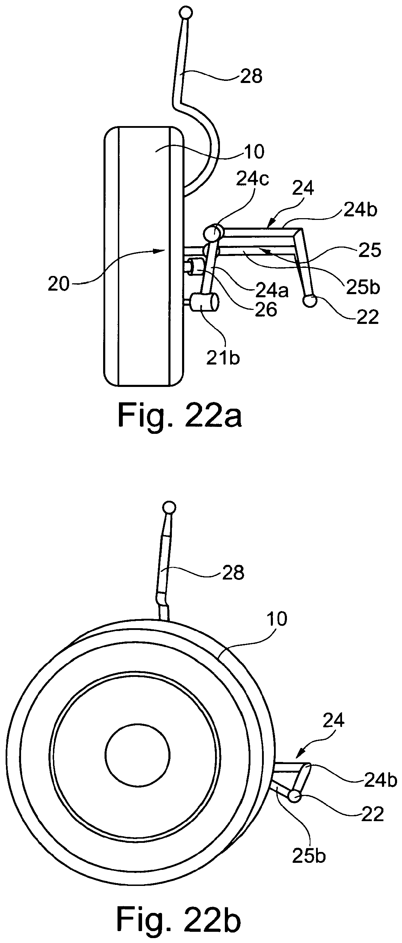

In dem in Figur 1 gezeigten nicht erfindungsgemäßen Beispiel ist nur der erste Teilquerlenker 24 derart ausgestaltet, dass ein Teil des Teilquerlenkers 24 beabstandet d zu einer Schwenkachse V24 ist, welche sich zwischen dem Radverbindungsgelenk 21 und dem Fahrzeugverbindungsgelenk 22 des Teilquerlenkers 24 erstreckt und um welche dieser Teilquerlenker 24 schwenkbar ist. Das Radverbindungsgelenk 21 und das Fahrzeugverbindungsgelenk 22 des ersten Teilquerlenkers 24 sind dabei Kugelgelenke. Die teilweise Beabstandung des ersten Teilquerlenkers 24 wird dabei dadurch erzielt, dass der erste Teilquerlenker auf einem einfach gewinkelten starren Teilquerlenkersegment basiert. Bei der genauen Formgebung des schwenkbaren Teilquerlenkers können Faktoren, wie der maximale Lenkwinkel, der Nachlauf, die Spreizung, die Kinematik der Ankopplung der Ausweichbewegung, die Festigkeit, der Herstellprozess, etc., berücksichtigt werden. Durch eine Schwenkbewegung dieses Teilquerlenkers 24 um die Schwenkachse V24 kann der beabstandete Teil des ersten Teilquerlenkers 24 dem Rad ausweichen und dadurch ein hoher maximaler Lenkwinkel des Rades in dieser Lenkeinschlagsrichtung erzielt werden. Insofern in die andere Lenkeinschlagsrichtung auch ein durchschnittlicher maximaler Lenkwinkel ausreichend ist, beispielsweise wenn der Querlenker nur zur Vereinfachung des seitlichen Einparkens, beispielsweise mit vier parallel eingeschlagenen Räder, eingesetzt wird, ist eine Erhöhung des maximalen Lenkwinkels nur in eine Lenkeinschlagsrichtung ausreichend. Daher ist es möglich den zweiten Teilquerlenker 25 gerade auszugestalten. Figur 1 zeigt, dass der erste 24 und zweite 25 Teilquerlenker mit einem gemeinsamen Radverbindungsgelenk 21 verbunden sind. Fahrzeugseitig ist der zweite Teilquerlenker 25 mit einem eigenen Fahrzeugverbindungsgelenk 23 in Form eines Kugelgelenks verbunden. Um den maximalen Lenkwinkel in beide Lenkeinschlagsrichtungen zu erhöhen, beispielsweise um die Wendigkeit des Fahrzeugs zu erhöhen und den Wendekreis des Fahrzeugs zu verbessern, ist in den in Figuren 2 bis 22b gezeigten Ausführungsformen sowohl der erste Teilquerlenker 24 als auch der zweite Teilquerlenker 25 derart ausgestaltet, dass ein Teil des Teilquerlenkers 24,25 beabstandet d,d' zu der Schwenkachse V24,V25 ist, welche sich zwischen dem Radverbindungsgelenk 21,21';21a,21b,21c und dem Fahrzeugverbindungsgelenk 22,22';23 des jeweiligen Teilquerlenkers 24,25 erstreckt und um welche der jeweilige Teilquerlenker 24,25 schwenkbar ist.

Im Rahmen der in Figur 2 gezeigten Ausführungsform wird dabei die teilweise Beabstandung des ersten 24 und zweiten 25 Teilquerlenkers dadurch erzielt, dass die Teilquerlenker 24,25 jeweils ein einfach gewinkeltes starres Teilquerlenkersegment aufweisen. Dabei sind die beiden Teilquerlenker 24,25 mit einem gemeinsamen Radverbindungsgelenk 21 in Form eines Kugelgelenks verbunden. Fahrzeugseitig sind die beiden Teilquerlenker 24,25 getrennt voneinander mit jeweils einem Fahrzeugverbindungsgelenk 22,23 in Form eines Kugelgelenks verbunden.

Die im Rahmen von Figur 3 gezeigte Ausführungsform unterscheidet sich im Wesentlichen dadurch von der in Figur 2 gezeigten Ausführungsform, dass das Radverbindungsgelenk kein Kugelgelenk, sondern eine mehrgelenkige Zusammenführung 21a,21b,21c ist, welche ein Kugelgelenk 21a und zwei Drehgelenke 21b,21c umfasst, wobei die Zusammenführung 21a,21b,21c durch das Kugelgelenk 21a gelenkig mit dem Rad und durch die Drehgelenke 21b;21c gelenkig mit jeweils einem der Teilquerlenker 24,25 verbindbar ist. Die Teilquerlenker 24,25 besitzen dadurch bezogen auf das Radverbindungsgelenk 21a,21b,21c unterschiedliche Drehpunkte, bezogen auf das Rad jedoch einen gemeinsamen Drehpunkt.

Die im Rahmen von Figur 4 gezeigte Ausführungsform unterscheidet sich im Wesentlichen dadurch von der in Figur 2 gezeigten Ausführungsform, dass das Fahrzeugverbindungsgelenk 22,22' des ersten Teilquerlenkers 24 kein Kugelgelenk, sondern eine mehrgelenkige Zusammenführung 22,22'aus zwei Drehgelenken 22,22' ist, welche durch das eine Drehgelenk 22 gelenkig mit dem Fahrzeug verbindbar ist und durch das andere Drehgelenk 22' gelenkig mit dem ersten Teilquerlenker 24 verbunden ist.

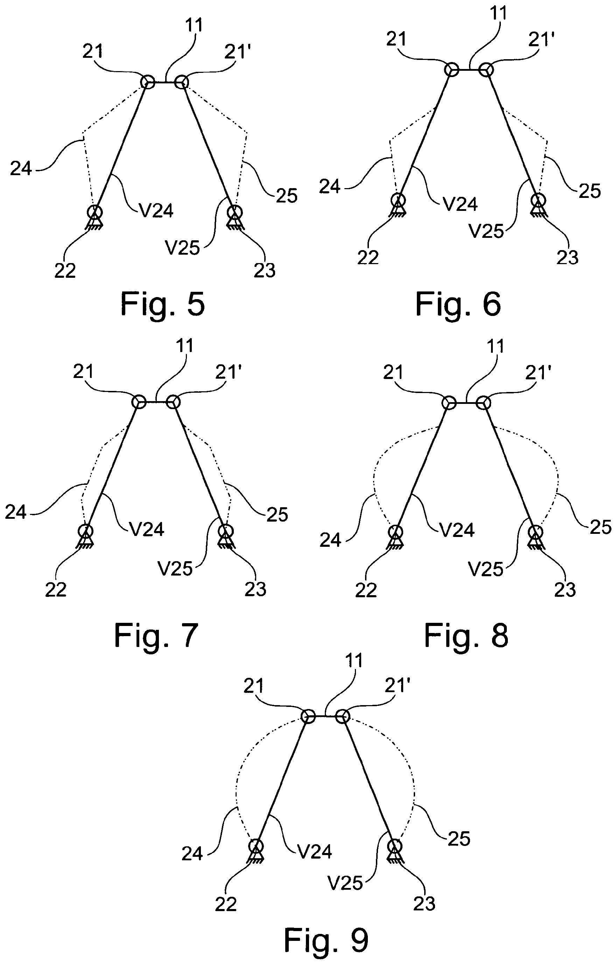

Die Figuren 5 bis 9 zeigen Ausführungsformen von aufgelösten Querlenkern mit zwei Teilquerlenkern 24,25, in denen die Teilquerlenker 24,25 getrennt voneinander an den Radträger 11 des Rad anbindbar sind und weisen damit keinen gemeinsamen realen Drehpunkt auf. Zudem illustrieren die Figuren 5 bis 9 unterschiedliche, insbesondere dreidimensionale, Ausgestaltungsformen, in denen die Teilquerlenker 24,25 beispielsweise teilweise gerade und/oder teilweise gewinkelte und/oder teilweise gebogene Teilquerlenkersegmente aufweisen.

Dabei sind die Teilquerlenker 24,25 auf der einen Seite jeweils mit einem eigenen Radverbindungsgelenk 21,21' verbunden. Auf der anderen Seite sind die Teilquerlenker 24,25 jeweils mit einem eigenen Fahrzeugverbindungsgelenk 22,23 verbunden. Durch die beiden Radverbindungsgelenke 21,21' kann insbesondere - ähnlich zu einer Vierlenkerachse - ein virtueller Drehpunkt erzeugt werden.

Im Rahmen der in Figur 5 gezeigten Ausführungsform wird dabei die teilweise Beabstandung des ersten 24 und zweiten 25 Teilquerlenkers ebenso wie in den in Figur 2 bis 4 gezeigten Ausführungsformen dadurch erzielt, dass die Teilquerlenker 24,25 jeweils ein einfach gewinkeltes starres Teilquerlenkersegment aufweisen.

Die im Rahmen von Figur 6 gezeigte Ausführungsform unterscheidet sich im Wesentlichen dadurch von der in Figur 5 gezeigten Ausführungsform, dass die teilweise Beabstandung des ersten 24 und zweiten 25 Teilquerlenkers dadurch erzielt wird, dass die Teilquerlenker 24,25 jeweils ein mehrfach, insbesondere zweifach, gewinkeltes starres Teilquerlenkersegment aufweisen. Figur 6 zeigt, dass dabei jeweils ein Teilquerlenkersegmentabschnitt entlang der Schwenkachse V24,V25 des jeweiligen Teilquerlenkers 24,25 ausgebildet sein kann. Um die Beabstandung zu erzielen, ist dieser Teilquerlenkersegmentabschnitt gewinkelt mit einem weiteren Teilquerlenkersegmentabschnitt verbunden, welcher wiederum gewinkelt mit einem noch weiteren Teilquerlenkersegmentabschnitt verbunden ist, um eine Anbindung des Teilquerlenkersegments in Höhe der Schwenkachse V24,V25 zu realisieren.

Die im Rahmen von Figur 7 gezeigte Ausführungsform unterscheidet sich im Wesentlichen dadurch von der in Figur 6 gezeigten Ausführungsform, dass die teilweise Beabstandung des ersten 24 und zweiten 25 Teilquerlenkers dadurch erzielt wird, dass die Teilquerlenker 24,25 jeweils ein dreifach gewinkeltes starres Teilquerlenkersegment aufweisen. Figur 7 zeigt, dass dabei jeweils ein Teilquerlenkersegmentabschnitt entlang der Schwenkachse V24,V25 des jeweiligen Teilquerlenkers 24,25 ausgebildet sein kann. Dieser Teilquerlenkersegmentabschnitt ist gewinkelt mit weiteren Teilquerlenkersegmentabschnitten verbunden, welcher zusammen mit zwei weiteren gewinkelt miteinander verbundenen Teilquerlenkersegmentabschnitt, eine bügelförmige beziehungsweise U-förmige Form ausbildet. Durch eine derartige bügelförmige beziehungsweise U-förmige Ausgestaltung der Teilquerlenkersegmente kann vorteilhafterweise besonders viel Raum zum Einlenken des Rades zur Verfügung gestellt werden. Eine derartige bügelförmige beziehungsweise U-förmige Ausgestaltung der Teilquerlenkersegmente kann gegebenenfalls auch ohne den entlang der Schwenkachse V24,V25 ausgebildeten Teilquerlenkersegmentabschnitt Abschnitt realisiert werden.

Die gestrichelten geraden Linien deuten an, dass die einzelnen Teilquerlenkersegmentabschnitte gerade ausgestaltet sein können. Die gestrichelten gebogenen Linien veranschaulichen, dass die Teilquerlenkersegmentabschnitte jedoch ebenso gebogen ausgestaltet werden können.

Die im Rahmen von Figur 8 gezeigte Ausführungsform unterscheidet sich im Wesentlichen dadurch von den in den Figuren 6 und 7 gezeigten Ausführungsformen, dass die teilweise Beabstandung des ersten 24 und zweiten 25 Teilquerlenkers dadurch erzielt wird, dass die Teilquerlenker 24,25 jeweils starre Teilquerlenkersegmente aufweisen, die jeweils einen gebogenen Teilquerlenkersegmentabschnitt aufweisen. Auf diese Weise kann ebenfalls eine bügelförmige beziehungsweise U-förmige Ausgestaltung der Teilquerlenkersegmente realisiert werden. Figur 8 zeigt insbesondere, dass die Teilquerlenkersegmente jeweils einen Teilquerlenkersegmentabschnitt aufweisen, welcher entlang der Schwenkachse V24,V25 des jeweiligen Teilquerlenkers 24,25 ausgebildet ist und welcher gewinkelt mit einem weiteren bogenförmigen Teilquerlenkersegmentabschnitt verbunden ist.

Die im Rahmen von Figur 9 gezeigte Ausführungsform unterscheidet sich im Wesentlichen dadurch von den in Figur 7 gezeigten Ausführungsformen, dass die teilweise Beabstandung des ersten 24 und zweiten 25 Teilquerlenkers dadurch erzielt wird, dass die Teilquerlenker 24,25 jeweils gebogene starre Teilquerlenkersegmente aufweisen. Figur 8 zeigt insbesondere, dass dabei eine bügelförmige beziehungsweise U-förmige Ausgestaltung der Teilquerlenkersegmente auch ohne einen entlang der Schwenkachse V24,V25 ausgebildeten Teilquerlenkersegmentabschnitt und/oder ohne gerade Teilquerlenkersegmentabschnitte realisiert werden.

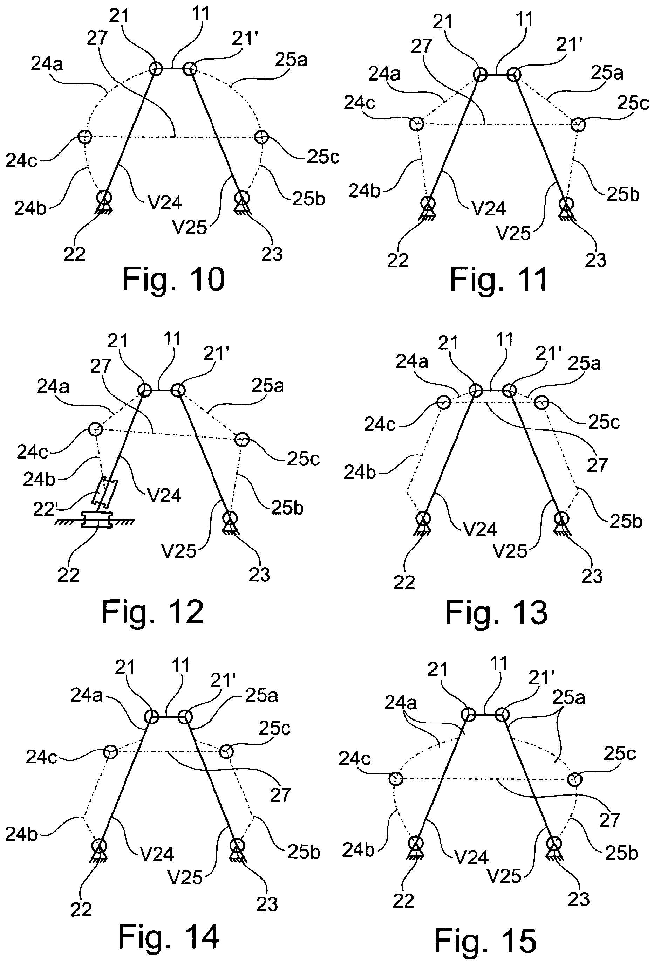

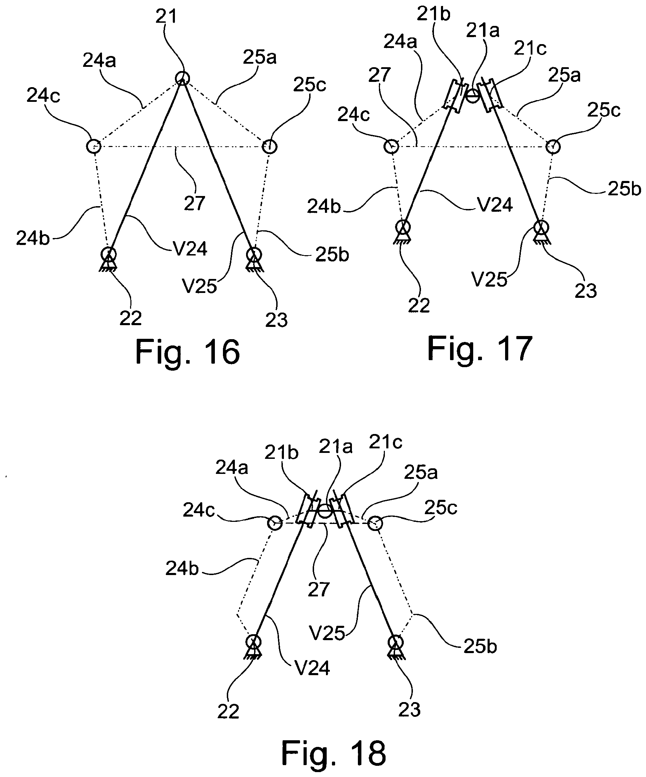

Die Figuren 10 bis 18 zeigen Ausführungsformen von aufgelösten Querlenkern mit zwei Teilquerlenkern 24a,24b,24c;25a,25b,25c, welche über eine Querlenkerkoppel 27 gelenkig miteinander verbunden sind. Da sich die Querlenkerkoppel 27 nicht in der Zeichenebene befinden muss, ist auch diese durch eine gestrichelte Linie dargestellt. Dabei zeigen die Figuren 10 bis 15 Ausführungsformen von aufgelösten Querlenkern mit zwei Teilquerlenkern 24a,24b,24c;25a,25b,25c, in denen die Teilquerlenker 24a,24b,24c;25a,25b,25c getrennt voneinander an den Radträger 11 des Rad anbindbar sind. Die Figuren 16 bis 18 zeigen dabei Ausführungsformen von aufgelösten Querlenkern mit zwei Teilquerlenkern 24a,24b,24c;25a,25b,25c, in denen die Teilquerlenker 24a,24b,24c;25a,25b,25c einen gemeinsamen radseitigen Drehpunkt aufweisen.

Die teilweise Beabstandung des ersten 24a,24b,24c und zweiten 25a,25b,25c Teilquerlenkers wird in den in den Figuren 10 bis 18 zeigen Ausführungsformen dadurch erzielt, dass die Teilquerlenker 24a,24b,24c;25a,25b,25c jeweils zwei, durch ein flexibles Verbindungselement 24c;25c verbundene, starre Teilquerlenkersegmente 24a,24b;25a,25b umfassen.

Die Querlenkerkoppel 27 verbindet dabei die beiden Teilquerlenker 24a,24b,24c;25a,25b,25c über deren flexible Verbindungselemente 24c;25c. So können vorteilhafterweise die Bewegungen der Teilquerlenker 24a,24b,24c;25a,25b,25c aneinander gekoppelt werden.

Bei den flexiblen Verbindungselementen 24;25c handelt es sich dabei um Kugelgelenke. Anstelle von Kugelgelenken können jedoch auch andersartige Gelenke beziehungsweise Gelenkkombinationen, beispielsweise auf der Basis von zwei Drehgelenken, als flexible Verbindungselemente 24c;25c eingesetzt werden.

Im Rahmen der in Figur 10 gezeigten Ausführungsform basieren die Teilquerlenker 24a,24b,24c;25a,25b,25c jeweils auf zwei, durch ein flexibles Verbindungselement 24c;25c verbundenen, gebogenen, starren Teilquerlenkersegmenten 24a,24b;25a,25b.

Im Rahmen der in Figur 11 gezeigten Ausführungsform basieren die Teilquerlenker 24a,24b,24c;25a,25b,25c jeweils auf zwei geraden, starren Teilquerlenkersegmenten 24a,24b;25a,25b, die jeweils durch ein flexibles Verbindungselement 24c;25c in einem Winkel zueinander verbunden sind.

Die in Figur 12 gezeigte Ausführungsform unterscheidet sich im Wesentlichen dadurch von der im Rahmen von Figur 11 gezeigten Ausführungsform, dass das Fahrzeugverbindungsgelenk 22,22' des ersten Teilquerlenkers 24a,24b,24c kein Kugelgelenk, sondern eine mehrgelenkige Zusammenführung 22,22'aus zwei Drehgelenken 22,22' ist, welche durch das eine Drehgelenk 22 gelenkig mit dem Fahrzeug und durch das andere Drehgelenk 22' gelenkig mit dem ersten Teilquerlenker 24 verbindbar ist.

Die in Figur 13 gezeigte Ausführungsform unterscheidet sich im Wesentlichen dadurch von der im Rahmen von Figur 11 gezeigten Ausführungsform, dass jeweils eines der zwei starren Teilquerlenkersegmente 24b;25b nicht gerade, sondern gewinkelt ausgebildet sind.

Die in Figur 14 gezeigte Ausführungsform unterscheidet sich im Wesentlichen dadurch von der im Rahmen von Figur 11 gezeigten Ausführungsform, dass jeweils beide starren Teilquerlenkersegmente 24b;25b nicht gerade, sondern gewinkelt ausgebildet sind. Dabei ist - ähnlich zu den in den Figuren 6,7 und 8 gezeigten Ausführungsformen - jeweils ein Teilquerlenkersegmentabschnitt entlang der Schwenkachse V24,V25 des jeweiligen Teilquerlenkers 24a,24b,24c;25a,25b,25c ausgebildet.

Die in Figur 15 gezeigte Ausführungsform unterscheidet sich im Wesentlichen dadurch von der im Rahmen von Figur 11 gezeigten Ausführungsform, dass die starren Teilquerlenkersegmenten 24a,24b;25a,25b zumindest teilweise gebogen ausgebildet und über die flexiblen Verbindungselemente 24c;25c nicht gewinkelt verbunden sind. Dabei ist - ähnlich zu den in den Figuren 6,7, 8 und 14 gezeigten Ausführungsformen - jeweils ein Teilquerlenkersegmentabschnitt entlang der Schwenkachse V24,V25 des jeweiligen Teilquerlenkers 24a,24b,24c;25a,25b,25c ausgebildet.

Die in den Figuren 16 und 17 gezeigten Ausführungsformen unterscheiden sich im Wesentlichen dadurch von der in Figur 11 gezeigten Ausführungsform, dass die Teilquerlenker 24a,24b,24c;25a,25b,25c nicht getrennt voneinander, sondern über einen gemeinsamem radseitigen Drehpunkt an den Radträger des Rades anbindbar sind. Im Rahmen der in Figur 16 gezeigten Ausführungsform dient hierzu ein in Form eines Kugelgelenks ausgestaltetes Radverbindungsgelenk 21. Im Rahmen der in Figur 17 gezeigten Ausführungsform dient hierzu eine mehrgelenkige Zusammenführung 21a,21b,21c, welche ein Kugelgelenk 21a und zwei Drehgelenke 21b,21c umfasst, wobei die Zusammenführung 21a,21b,21c durch das Kugelgelenk 21a gelenkig mit dem Rad und durch die Drehgelenke 21b;21c gelenkig mit jeweils einem der Teilquerlenker 24a,24b,24c;25a,25b,25c verbindbar ist.

Figur 18 zeigt eine Ausführungsform eines aufgelösten Querlenkers mit einem ersten 24a,24b,24c und einem zweiten 25a,25b,25c Teilquerlenker, einem Radverbindungsgelenk 21a,21b,21c zum gelenkigen Anbinden des Querlenkers an ein Rad und zwei Fahrzeugverbindungsgelenken 22,23 zum gelenkigen Anbinden des Querlenkers an ein Fahrzeug. Die Teilquerlenker 24a,24b,24c;25a,25b,25c sind dabei einerseits jeweils getrennt voneinander mit einem der Fahrzeugverbindungsgelenke 22;23 verbunden. Andererseits sind die Teilquerlenker 24a,24b,24c;25a,25b,25c mit einem gemeinsamen Radverbindungsgelenk 21a,21b,21c verbunden. Das Radverbindungsgelenk 21a,21b,21c ist dabei in Form einer mehrgelenkigen Zusammenführung 21a,21b,21c ausgebildet, welche ein Kugelgelenk 21a und zwei Drehgelenke 21b,21c umfasst, wobei die Zusammenführung 21a,21b,21c durch das Kugelgelenk 21a gelenkig mit dem Rad verbindbar ist und durch die Drehgelenke 21b;21c gelenkig mit jeweils einem der Teilquerlenker 24a,24b,24c;25a,25b,25c verbunden ist.

Dabei ist der erste Teilquerlenker 24a,24b,24c derart ausgestaltet, dass ein Teil des ersten Teilquerlenkers 24a,24b,24c beabstandet d zu der Schwenkachse V24 ist, welche sich zwischen dem Radverbindungsgelenk 21a,21b,21c und dem Fahrzeugverbindungsgelenk 22 des ersten Teilquerlenkers 24a,24b,24c erstreckt und um welche der erste Teilquerlenker 24a,24b,24c schwenkbar ist. Ebenso ist der zweite Teilquerlenker 25a,25b,25c derart ausgestaltet, dass ein Teil des zweiten Teilquerlenkers 25a,25b,25c beabstandet d' zu der Schwenkachse V25 ist, welche sich zwischen dem Radverbindungsgelenk 21a,21b,21c und dem Fahrzeugverbindungsgelenk 23 des zweiten Teilquerlenkers 25a,25b,25c erstreckt und um welche der zweite Teilquerlenker 25a,25b,25c schwenkbar ist.

Der erste Teilquerlenker 24a,24b,24c wird dabei durch ein gerades Teilquerlenkersegment 24a, ein gewinkeltes Teilquerlenkersegment 24b und ein flexibles Verbindungselement 24c, insbesondere in Form eines Kugelgelenkes, gebildet, wobei das flexible Verbindungselement 24c das gerade Teilquerlenkersegment 24a mit dem gewinkelten Teilquerlenkersegment 24b zueinander gewinkelt verbindet. Dabei resultiert insgesamt eine U-förmige beziehungsweise bügelförmige Form des ersten Teilquerlenker 24a,24b,24c. Der zweite Teilquerlenker 25a,25b,25c wird dabei ebenfalls durch ein gerades Teilquerlenkersegment 25a, ein gewinkeltes Teilquerlenkersegment 25b und ein flexibles Verbindungselement 25c, insbesondere in Form eines Kugelgelenkes, gebildet, wobei das flexible Verbindungselement 25c das gerade Teilquerlenkersegment 25a mit dem gewinkelten Teilquerlenkersegment 25b zueinander gewinkelt verbindet. Dabei resultiert ebenfalls insgesamt eine U-förmige beziehungsweise bügelförmige Form des zweiten Teilquerlenker 25a,25b,25c.

Zudem weist der Querlenker eine Querlenkerkoppel 27 auf, welche den ersten 24a,24b,24c und den zweiten 25a,25b,25c Teilquerlenker über deren flexible Verbindungselemente 24c;25c verbindet.

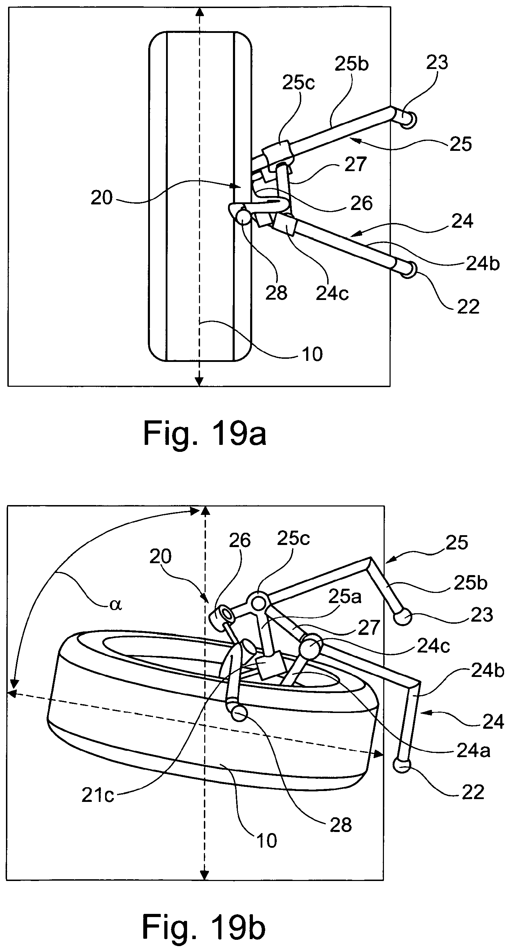

Die Figuren 19a bis 22b zeigen ein linkes Vorderrad 10 eines Fahrzeugs, welches mit einer spezielle Ausgestaltung der in Figur 18 skizzierten Ausführungsform eines erfindungsgemäßen Querlenkers ausgestattet ist.

Die Figuren 19a und 19b sind schematische Draufsichten von oben auf das Vorderrad 10. Dabei zeigt Figur 19a das Vorderrad 10 im uneingelenkten Zustand also beispielsweise bei einer Geradeausfahrt, wobei Figur 19b das Vorderrad 10 im maximal eingelenkten Zustand zeigt. Figur 19b zeigt insbesondere, dass durch die gezeigte Ausgestaltung ein maximaler Lenkwinkel α von fast 90 ° realisiert werden kann.

Figur 19a zeigt insbesondere, dass der Querlenker 20 einen hinteren 24 und einen vorderen 25 Teilquerlenker umfasst. Der hintere Teilquerlenker 24 ist dabei mit einem ersten Fahrzeugverbindungsgelenk 22 in Form eines Kugelgelenks verbunden, wobei der vordere Teilquerlenker 25 mit einem zweiten Fahrzeugverbindungsgelenk 23 in Form eines Kugelgelenks verbunden ist.

Die Figuren 19a und 19b illustrieren, dass die beiden Teilquerlenker 24,25 eine im Wesentlichen U-förmig beziehungsweise bügelförmige Gestalt aufweisen. Beim Übergang von der uneingelenkten Stellung in die maximal eingelenkte Stellung des Rades, werden dabei die beiden U-förmigen Teilquerlenker 24,25 von einer im Wesentlichen vertikalen Stellung, jeweils um eine sich entlang der Öffnung der U-förmigen Teilquerlenker 24,25 erstreckende Achse in eine im Wesentlichen horizontale Stellung geschwenkt, wobei das Rad 10 durch die Öffnung eines der U-förmigen Teilquerlenker 24 in den von diesem Teilquerlenker 24 umgebenen Raum eindringen kann. Bei einem Lenkeinschlag in die andere Lenkeinschlagsrichtung kann das Rad 10 durch die Öffnung des anderen U-förmigen Teilquerlenkers 25 in den von diesem Teilquerlenker 25 umgebenen Raum eindringen. So kann vorteilhafterweise der maximale Lenkwinkel des Rades 10 in beide Lenkeinschlagsrichtungen deutlich erhöht werden.

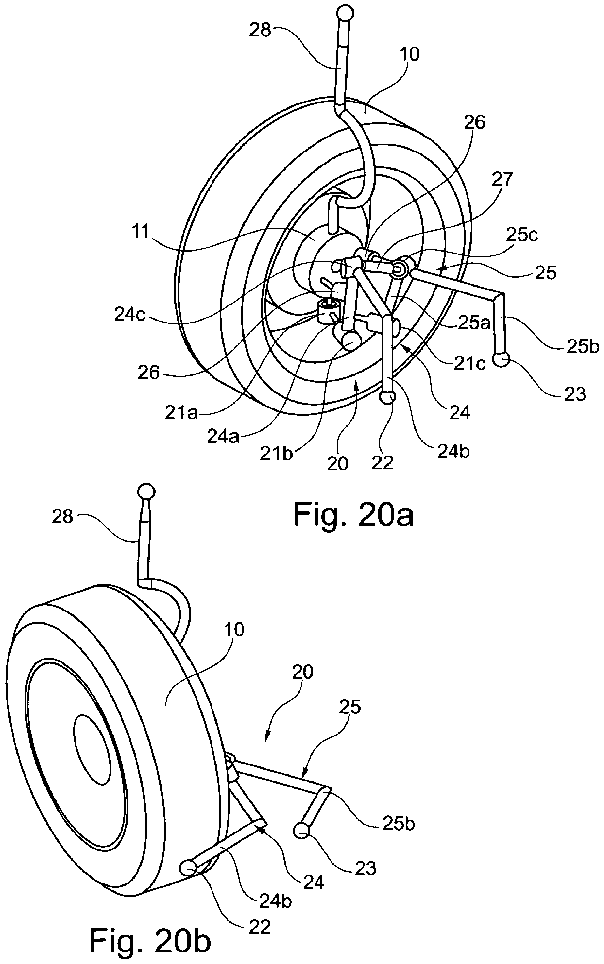

Die Figuren 20a und 20b sind perspektivische Ansichten der in den Fig. 19a und 19b gezeigten Ausgestaltung im uneingelenkten beziehungsweise im eingelenkten Zustand.

Figur 20a zeigt, dass sowohl der hintere Teilquerlenker 24 als auch der vordere Teilquerlenker 25 jeweils durch ein gerades Teilquerlenkersegment 24a,25a, ein gewinkeltes Teilquerlenkersegment 24b,25b und ein flexibles Verbindungselement 24c, 25c in Form eines Kugelgelenkes gebildet werden, wobei jeweils das flexible Verbindungselement 24c,25c das gerade Teilquerlenkersegment 24a,25a mit dem gewinkelten Teilquerlenkersegment 24b,25b zueinander gewinkelt verbindet, wodurch die U-förmige beziehungsweise bügelförmige Gestalt resultiert.

Figur 20a zeigt zudem, dass der hintere Teilquerlenker 24 und der vordere Teilquerlenker 25 jeweils durch das gewinkelte Teilquerlenkersegment 24b,25b mit dem jeweiligen Fahrzeugverbindungsgelenk 22,23 verbunden sind.

Figur 20a zeigt weiterhin, dass der hintere Teilquerlenker 24 und der vordere Teilquerlenker 25 jeweils durch das gerade Teilquerlenkersegment 24a,25a mit einem Drehgelenk 20b,20c eines Radverbindungsgelenks 21a,21b,21c verbunden sind, welches in Form einer mehrgelenkigen Zusammenführung 21a,21b,21c ausgebildet ist, die ein Kugelgelenk 21a und zwei Drehgelenke 21b,21c umfasst und die durch das Kugelgelenk 21a gelenkig mit dem Radträger 11 des Rades 10 verbunden ist.

Figur 20a veranschaulicht zudem, dass sich die Schwenkachse des hinteren Teilquerlenkers zwischen dem Radverbindungsgelenk 21b und dem Fahrzeugverbindungsgelenk 22 des hinteren Teilquerlenkers 24 und die Schwenkachse des vorderen Teilquerlenkers 25 zwischen dem Radverbindungsgelenk 21c und dem Fahrzeugverbindungsgelenk 23 des vorderen Teilquerlenkers 25 erstreckt. Dass dabei die Teilquerlenker 24,25 dabei teilweise deutlich beabstandet zu der jeweiligen Schwenkachse ausgebildet sind, ist in Figur 20a ebenfalls zu erkennen.

Zudem zeigt Figur 20a, dass der Querlenker 20 eine Querlenkerkoppel 27 aufweist, welche den ersten 24 und den zweiten 25 Teilquerlenker über deren flexible Verbindungselemente 24c;25c verbindet.

Darüber hinaus zeigt Figur 20a, dass der vordere Teilquerlenker 25 über eine Radkoppel 26 mit dem Radträger 11 des Rades 10 gekoppelt ist. Durch die Radkoppel 26 kann dann eine Lenkbewegung des Rades 10 in eine Schwenkbewegung des vorderen Teilquerlenkers 25 und über die Querlenkerkoppel 27 auch in eine Schwenkbewegung des hinteren Teilquerlenkers 24 übertragen werden.

Ferner skizziert Figur 20a, dass das Vorderrad zusätzlich eine vertikale Radführung 28 aufweisen kann, welche aus Gründen der Übersichtlichkeit der Figuren 19a bis 22b jedoch nur stark schematisiert dargestellt ist.

Die Figuren 20b bis 22b zeigen weitere Ansichten dieser Ausgestaltung.

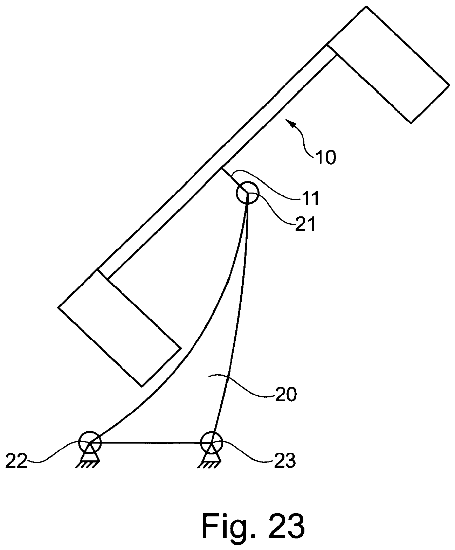

Figur 23 zeigt einen herkömmlichen Querlenker 20, welcher durch zwei Kugelgelenke 22,23 gelenkig mit dem Fahrzeug und durch ein weiteres Kugelgelenk 21 gelenkig mit dem Radträger 11 des Rades 10 verbunden ist. Figur 23 veranschaulicht, dass sich das Rad 10 nicht stärker einlenken lässt ohne mit dem Querlenker 20 zu kollidieren und dass dadurch der maximale Lenkwinkel des Rades 10 durch den Querlenker 20 auf etwa 45 ° beschränkt wird.

### Bezugszeichenliste

- 10: Fahrzeugrad
- 11: Radträger

- 20: Querlenker
- 21, 21': Kugelgelenk des Radverbindungsgelenks
- 21a: Kugelgelenk des Radverbindungsgelenks
- 21b: Drehgelenk des Radverbindungsgelenks
- 21c: Drehgelenk des Radverbindungsgelenks
- 22,22': Fahrzeugverbindungsgelenk des hinteren Teilquerlenkers
- 23: Fahrzeugverbindungsgelenk des vorderen Teilquerlenkers
- V24: Schwenkachse des hinteren Teilquerlenkers
- 24: hinterer Teilquerlenker
- 24a,b: starre Teilquerlenkersegmente des hinteren Teilquerlenkers
- 24c: Kugelgelenk des hinteren Teilquerlenkers
- 25: vorderer Teilquerlenker
- V25: Schwenkachse des vorderen Teilquerlenkers
- 25a,b: starre Teilquerlenkersegmente des vorderen Teilquerlenkers
- 25c: Kugelgelenk des vorderen Teilquerlenkers
- d,d': Abstand zwischen beabstandetem Teilquerlenkerteil und Schwenkachse
- 26: Radkoppel
- 27: Querlenkerkoppel
- 28: vertikale Radführung
- α: maximaler Lenkwinkel

## Patentansprüche

1. Querlenker (20) für ein Rad (10) eines Fahrzeugs, insbesondere eines Kraftfahrzeugs, aufweisend
mindestens ein Radverbindungsgelenk (21;21';21a,21b,21c) zum gelenkigen Anbinden des Querlenkers (20) an das Rad (10) und
mindestens zwei Fahrzeugverbindungsgelenke (22,22';23) zum gelenkigen Anbinden des Querlenkers (20) an das Fahrzeug,
wobei der Querlenker (20) ein aufgelöster Querlenker ist, welcher zwei schwenkbare Teilquerlenker (24,25) umfasst, wobei die Teilquerlenker (24,25) einerseits mit einem Fahrzeugverbindungsgelenk (22,22';23) und andererseits mit einem Radverbindungsgelenk (21;21';21a,21b,21c) verbunden sind,
wobei die zwei schwenkbaren Teilquerlenker (24,25) um eine sich zwischen dem Radverbindungsgelenk (21;21';21a,21b,21c) und dem Fahrzeugverbindungsgelenk (22,22';23) des jeweiligen Teilquerlenkers (24,25) erstreckende Schwenkachse (V24,V25) schwenkbar sind, wobei mindestens ein Teil des jeweiligen schwenkbaren Teilquerlenkers (24,25) beabstandet zu der Schwenkachse (V24,V25) des schwenkbaren Teilquerlenkers (24,25) ausgebildet ist.

2. Querlenker nach Anspruch 1, wobei mindestens einer der schwenkbaren Teilquerlenker (24,25) mindestens ein starres Teilquerlenkersegment (24a,24b;25a,25b) umfasst, welches zumindest teilweise gewinkelt und/oder teilweise gebogen ausgeführt ist.

3. Querlenker nach Anspruch 1 oder 2, wobei mindestens einer der schwenkbaren Teilquerlenker (24,25) mindestens zwei starre Teilquerlenkersegmente (24a,24b;25a,25b) umfasst, welche durch ein flexibles Verbindungselement (24c;25c), insbesondere zueinander gewinkelt, verbunden sind.

4. Querlenker nach Anspruch 3, wobei das flexible Verbindungselement (24c;25c) ein Kugelgelenk ist.

5. Querlenker nach einem der Ansprüche 1 bis 4, wobei mindestens einer der schwenkbaren Teilquerlenker (24;25) durch eine Radkoppel (26) mit einem Bauteil verbunden ist, welches eine mit einer Lenkbewegung des Rades (10) einhergehende Bewegung vollzieht,
insbesondere wobei das Bauteil das Rad (10), ein Radträger (11), ein Lenkgetriebe zur Lenkung des Rades (10) oder einen Aktuator zur Lenkung des Rades (10) ist.

6. Querlenker nach einem der Ansprüche 1 bis 5, wobei der Querlenker (20) eine Querlenkerkoppel (27) aufweist, durch welche die zwei schwenkbaren Teilquerlenker (24;25), insbesondere gelenkig, miteinander verbunden sind.

7. Querlenker nach einem der Ansprüche 1 bis 6,
wobei der Querlenker (20) ein Radverbindungsgelenk (21;21';21a,21b,21c) umfasst, über welches die Teilquerlenker (24;25) gemeinsam mit dem Rad (10) verbunden sind, oder
wobei der Querlenker mehrere Radverbindungsgelenke (21,21') umfasst, wobei die Teilquerlenker (24;25) jeweils getrennt voneinander über ein Radverbindungsgelenk (21,21') mit dem Rad (10) verbunden sind.

8. Querlenker nach einem der Ansprüche 1 bis 7, wobei der Abstand (d,d') zwischen dem mindestens einen zur Schwenkachse (V24,V25) beabstandeten Teil des jeweiligen schwenkbaren Teilquerlenkers (24,25) und der Schwenkachse (V24,V25) des schwenkbaren Teilquerlenkers (24,25) ≥ 2 cm, insbesondere ≥ 5 cm, beträgt.

9. Radaufhängung, insbesondere für ein Rad mit einem Radnabenantrieb, umfassend mindestens einen Querlenker nach einem der Ansprüche 1 bis 8.

## Claims

1. Control arm (20) for a wheel (10) of a vehicle, in particular of a motor vehicle, having
at least one wheel connecting joint (21; 21'; 21a, 21b, 21c) for attaching the control arm (20) in an articulated manner to the wheel (10), and
at least two vehicle connecting joints (22, 22'; 23) for attaching the control arm (20) in an articulated manner to the vehicle,
the control arm (20) being a compound control arm which comprises two pivotable part control arms (24, 25),
the part control arms (24, 25) being connected on one side to a vehicle connecting joint (22, 22'; 23) and being connected on the other side to a wheel connecting joint (21; 21'; 21a, 21b, 21c),
it being possible for the two pivotable part control arms (24, 25) to be pivoted about a pivot axis (V24, V25) which extends between the wheel connecting joint (21; 21'; 21a, 21b, 21c) and the vehicle connecting joint (22, 22'; 23) of the respective part control arm (24, 25),
at least one part of the respective pivotable part control arm (24, 25) being configured spaced apart from the pivot axis (V24, V25) of the pivotable part control arm (24, 25).

2. Control arm according to Claim 1, at least one of the pivotable part control arms (24, 25) comprising at least one rigid part control arm segment (24a, 24b; 25a, 25b) which is configured so as to be angled at least partially and/or curved partially.

3. Control arm according to Claim 1 or 2, at least one of the pivotable part control arms (24, 25) comprising at least two rigid part control arm segments (24a, 24b; 25a, 25b) which are connected by way of a flexible connecting element (24c; 25c), in particular such that they are angled with respect to one another.

4. Control arm according to Claim 3, the flexible connecting element (24c; 25c) being a ball joint.

5. Control arm according to one of Claims 1 to 4, at least one of the pivotable part control arms (24; 25) being connected by way of a wheel coupler (26) to a component which performs a movement which accompanies a steering movement of the wheel (10),
the component being, in particular, the wheel (10), a wheel support (11), a steering gear for steering the wheel (10), or an actuator for steering the wheel (10).

6. Control arm according to one of Claims 1 to 5, the control arm (20) having a control arm coupler (27), by way of which the two pivotable part control arms (24; 25) are connected to one another, in particular in an articulated manner.

7. Control arm according to one of Claims 1 to 6, the control arm (20) comprising a wheel connecting joint (21; 21'; 21a, 21b, 21c), via which the part control arms (24; 25) are connected jointly to the wheel (10), or
the control arm comprising a plurality of wheel connecting joints (21, 21'), the part control arms (24; 25) being connected in each case separately from one another to the wheel (10) via a wheel connecting joint (21, 21').

8. Control arm according to one of Claims 1 to 7, the spacing (d, d') between the at least one part of the respective pivotable part control arm (24, 25) which is spaced apart from the pivot axis (V24, V25) and the pivot axis (V24, V25) of the pivotable part control arm (24, 25) being ≥ 2 cm, in particular ≥ 5 cm.

9. Wheel suspension system, in particular for a wheel with a wheel hub drive, comprising at least one control arm according to one of Claims 1 to 8.

## Revendications

1. Bras oscillant transversal (20) pour une roue (17) d'un véhicule, en particulier d'un véhicule automobile, présentant
au moins une articulation de liaison à la roue (21 ; 21' ; 21a, 21b, 21c) pour la liaison articulée du bras oscillant transversal (20) à la roue (10) et
au moins deux articulations de liaison au véhicule (22, 22' ; 23) pour la liaison articulée du bras oscillant transversal (20) au véhicule,
le bras oscillant transversal (20) étant un bras oscillant composé, qui comprend deux bras oscillants transversaux partiels pivotants (24 25),
les bras oscillants transversaux partiels (24, 25) étant connectés d'une part à une articulation de liaison au véhicule (22, 22' ; 23) et d'autre part à une articulation de liaison à la roue (21 ; 21' ; 21a, 21b, 21c),
les deux bras oscillants transversaux partiels pivotants (24, 25) pouvant pivoter autour d'un axe de pivotement (V24, V25) s'étendant entre la liaison d'articulation à la roue (21 ; 21' ; 21a, 21b, 21c) et la liaison d'articulation au véhicule (22, 22' ; 23) du bras oscillant transversal partiel respectif (24, 25),
au moins une partie du bras oscillant transversal partiel pivotant respectif (24, 25) étant réalisée à distance de l'axe de pivotement (V24, V25) du bras oscillant transversal partiel pivotant (24, 25) .

2. Bras oscillant transversal selon la revendication 1, dans lequel au moins l'un des bras oscillants transversaux partiels pivotants (24, 25) comprend au moins un segment de bras oscillant transversal partiel rigide (24a, 24b ; 25a, 25b) qui est réalisé de manière au moins partiellement coudée et/ou au moins partiellement courbée.

3. Bras oscillant transversal selon la revendication 1 ou 2, dans lequel au moins l'un des bras oscillants transversaux partiels pivotants (24, 25) comprend au moins deux segments de bras oscillants transversaux partiels rigides (24a, 24b ; 25a, 25b) qui sont connectés par un élément de liaison flexible (24c ; 25c), en particulier de manière coudée l'un par rapport à l'autre.

4. Bras oscillant transversal selon la revendication 3, dans lequel l'élément de liaison flexible (24c ; 25c) est une articulation sphérique.

5. Bras oscillant transversal selon l'une quelconque des revendications 1 à 4, dans lequel au moins l'un des bras oscillants transversaux partiels (24 ; 25) est connecté par une bielle de roue (26) à un composant qui effectue un mouvement associé à un mouvement de direction de la roue (10),
en particulier le composant étant la roue (10), un support de roue (11), une transmission de direction pour la direction de la roue (10) ou un actionneur pour la direction de la roue (10).

6. Bras oscillant transversal selon l'une quelconque des revendications 1 à 5, dans lequel le bras oscillant transversal (20) présente une bielle de bras oscillant transversal (27) par le biais de laquelle les deux bras oscillants transversaux partiels pivotants (24 ; 25) sont connectés l'un à l'autre, notamment de manière articulée.

7. Bras oscillant transversal selon l'une quelconque des revendications 1 à 6,
dans lequel le bras oscillant transversal (20) comprend une articulation de liaison à la roue (21 ; 21' ; 21a, 21b, 21c), par le biais de laquelle les bras oscillants transversaux partiels (24 ; 25) sont connectés ensemble à la roue (10), ou dans lequel le bras oscillant transversal comprend plusieurs articulations de liaison à la roue (21, 21'), les bras oscillants transversaux partiels (24 ; 25) étant connectés à la roue (10) à chaque fois de manière séparée l'un de l'autre par le biais d'une articulation de liaison à la roue (21, 21').

8. Bras oscillant transversal selon l'une quelconque des revendications 1 à 7, dans lequel la distance (d, d') entre l'au moins une partie du bras oscillant transversal pivotant respectif (24, 25) espacée de l'axe de pivotement (V24, V25) et l'axe de pivotement (V24, V25) du bras oscillant transversal partiel pivotant (24, 25) est ≥ 2 cm, en particulier ≥ 5 cm.

9. Suspension de roue, en particulier pour une roue avec un entraînement de moyeu de roue, comprenant au moins un bras oscillant transversal selon l'une quelconque des revendications 1 à 8.
